# EUROPÄISCHE PATENTSCHRIFT

(11) **EP 3 347 263 B1**
(45) Veröffentlichungstag und Bekanntmachung des Hinweises auf die Patenterteilung: **07.04.2021**
(21) Anmeldenummer: 16763496.3
(22) Anmeldetag: 06.09.2016
(51) Int. Cl.: B62K 11/00, A61G 5/04

(54) **DYNAMISCH BALANCIERENDES FAHRZEUG**
DYNAMICALLY BALANCING VEHICLE
VÉHICULE À ÉQUILIBRAGE DYNAMIQUE

(30) Priorität: 10.09.2015 DE 102015217327
(43) Veröffentlichungstag der Anmeldung: 18.07.2018
(73) Patentinhaber: Maurer, Cornelia, 71404 Korb (DE); Maurer, Armin, 71404 Korb (DE); Bernhard, Uwe, 71522 Backnang (DE)
(72) Erfinder: RIEXINGER, Ulrich, 74420 Oberrot (DE)
(74) Vertreter: BRP Renaud & Partner mbB Rechtsanwälte Patentanwälte Steuerberater
(86) Internationale Anmeldenummer: PCT/EP2016/070920
(87) Internationale Veröffentlichungsnummer: WO 2017/042145

(56) Entgegenhaltungen:
- DE-A1-102007 061 708
- US-A1- 2008 245 594
- US-A1- 2009 115 149
- US-A1- 2010 114 468
- US-A1- 2011 204 592

## Beschreibung

Die vorliegende Erfindung betrifft ein dynamisch balancierendes Fahrzeug gemäß dem Oberbegriff des Anspruchs 1.

Ein dynamisch balancierendes Fahrzeug besitzt ein Fahrgestell, das über wenigstens ein Rad auf einem Untergrund abgestützt ist, einen Antrieb zum Antreiben des wenigstens einen Rads, eine Neigungssensorik und eine Steuereinrichtung. Diese Fahrzeuge werden entweder mit nur einem einzigen Rad oder mit mehreren Rädern, bevorzugt mit genau zwei Rädern, verwendet, die dann jedoch um eine gemeinsame Raddrehachse drehen, die sich parallel zu einer Fahrzeugquerachse erstreckt. Üblicherweise besitzt das Fahrgestell eine Trittfläche, auf die ein Fahrzeugführer stehen kann. Die Steuerungseinrichtung steuert den jeweiligen Antrieb so an, dass das Fahrzeug ausbalanciert wird. Hierzu wird unter anderem ein Neigungswinkel der Fahrzeuglängsachse gegenüber einer sich senkrecht zur Gravitationsrichtung erstreckenden Horizontalebene ermittelt. Die Steuerungseinrichtung versucht nun permanent durch entsprechende Ansteuerung des Antriebs, diesen Neigungswinkel auf den Wert Null zurückzustellen, Der Fahrzeugführer kann nun durch Verlagern seines Körperschwerpunktes die Neigung des Fahrgestells gegenüber der Horizontalebene verändern, wodurch es je nach Neigungswinkel zu einer Beschleunigung oder zu einem Abbremsen des Fahrzeugs kommt.

Bei einem solchen Fahrzeug, das genau zwei Räder aufweist, die um eine gemeinsame Raddrehachse rotieren, ist für jedes Rad ein separater Antrieb vorgesehen. Ferner ist eine Lenkeinrichtung zum Erzeugen von Lenkbefehlen vorgesehen, Je nach Lenkbefehl können die Antriebe für die beiden Räder unterschiedlich betätigt werden, wodurch sich eine entsprechende Lenkbetätigung des Fahrzeugs ergibt. Eine derartige Lenkeinrichtung kann beispielsweise einen Schalter aufweisen, mit dem der Fahrzeugführer die Lenkbefehle erzeugen kann. Alternativ kann die Lenkeinrichtung eine vom Fahrzeugführer betätigbare Lenkstange aufweisen, die über ein Lenkerlager am Fahrgestell um eine parallel zu einer Fahrzeuglängsachse verlaufende Lenkachse schwenkbar gelagert ist. Bekannt geworden sind derartige dynamisch balancierende Fahrzeuge unter der Bezeichnung "Segway" des Herstellers Segway Incorporated,

Aus der WO 2011/106767 A2 ist ein dynamisch balancierendes Fahrzeug dieser Art bekannt, das jedoch anstelle eines Trittbretts mit Trittfläche für einen stehenden Fahrzeugführer mit einem Fahrzeugsitz ausgestattet ist, auf dem der Fahrzeugführer Platz nehmen kann. Da bei einem sitzenden Fahrzeugführer der Schwerpunkt sehr viel niedriger ist, wirkt sich eine Schwerpunktverlagerung weniger deutlich auf den Neigungswinkel des Fahrzeugs aus. Außerdem ist bei einem sitzenden Fahrzeugführer im Wesentlichen nur noch der Oberkörper beweglich, um den Schwerpunkt des Fahrzeugführers zu verändern. Dementsprechend ist die Verlagerung des Schwerpunkts und somit die Beeinflussung des Neigungswinkels bei einem derartigen dynamisch balancierenden Fahrzeug mit Fahrzeugsitz erheblich reduziert. Um hier Abhilfe zu schaffen, ist beim bekannten Fahrzeug vorgesehen, den Fahrzeugsitz am Fahrgestell in der Fahrzeuglängsachse verstellbar anzubringen. Hierdurch kann der Fahrzeugführer seinen Schwerpunkt deutlich besser verlagern, wodurch die Beeinflussung des Neigungswinkels entsprechend verstärkt wird. In der Folge reagiert das Fahrzeug mit erhöhter Dynamik. Um den Fahrzeugsitz nun relativ zum Fahrgestell bewegen zu können, ist das bekannte Fahrzeug mit einer Hebelanordnung ausgestattet, die einen Haupthebel mit Handgriff und einen Zusatzhebel umfasst. Der Haupthebel trägt an seinem oberen Ende den Handgriff und ist an seinem unteren Ende gelenkig mit einer Fußabstellplatte verbunden, die fest am Fahrgestell angebracht ist und die zum Aufstellen der Füße des sitzenden Fahrzeugführers dient. Der Zusatzhebel verbindet nun den Haupthebel zwischen dessen Enden mit dem Fahrzeugsitz. Durch Ziehen und Drücken am Handgriff kann der Fahrzeugführer sich mitsamt dem Fahrzeugsitz nach vorn bzw. nach hinten verlagern, was eine entsprechende Schwerpunktveränderung mit sich bringt. Hierbei werden alle vom Fahrzeugführer in den Haupthebel eingeleiteten Kräfte von der Lagerung an der Fußaufstellplatte aufgenommen, wodurch diese besonders hohen Belastungen ausgesetzt ist.

Ein gattungsgemäßes Fahrzeug ist z.B. aus der US 2011/0204592 A1 bekannt, Das Fahrgestell weist ein Untergestell und ein darauf angeordnetes Obergestell auf. Das Untergestellt nimmt die Räder und die Antriebseinrichtung auf. Das Obergestellt ist über Beine am Untergestell abgestützt und trägt den Fahrzeugsitz. Die Lenkeinrichtung weist zum Erzeugen von Lenkbefehlen eine vom Fahrzeugführer betätigbare Lenkstange auf, die über ein Lenkerlager um eine parallel zu einer Fahrzeuglängsachse verlaufende Lenkachse schwenkbar gelagert ist. Beim bekannten Fahrzeug ist das Lenkerlager an einem der Beine des Obergestells angeordnet.

Die vorliegende Erfindung beschäftigt sich mit dem Problem, für ein dynamisch balancierendes Fahrzeug, das mit einem Fahrzeugsitz und mit einer Lenkstange ausgestattet ist, eine verbesserte Ausführungsform anzugeben, die sich insbesondere durch eine reduzierte Belastung des Lenkerlagers auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Lenkstange mit Hilfe einer Kopplungseinrichtung am Fahrgestell abzustützen, so dass diese Kopplungseinrichtung einen wesentlichen Anteil der vom Fahrzeugführer in die Lenkstange eingeleiteten Zug- und Druckkräfte aufnimmt, was zu einer signifikanten Entlastung des Lenkerlagers führt. Außerdem wird erfindungsgemäß vorgeschlagen, das Fahrgestell mit einem Untergestell und mit einem damit fest verbundenen Obergestell auszustatten, die bezüglich einer Fahrzeughochachse übereinander angeordnet sind. Während das Lenkerlager am Untergestell angeordnet ist, wird die Kopplungseinrichtung mit dem Obergestell verbunden. Hierdurch werden die über die Lenkstange auf das Lenkerlager übertragenen Hebelkräfte, die beim Einleiten der Zug- und Druckkräfte in die Lenkstange entstehen, signifikant reduziert, da sich die wirksamen Hebelarme verkleinern. Im Einzelnen ist die Kopplungseinrichtung so ausgestaltet und angeordnet, dass sie das Obergestell zur Druck- und Druckkraftübertragung in der Fahrzeuglängsachse mit der Lenkstange verbindet und dabei Relativbewegungen zwischen der Lenkstange und dem Obergestell in der Fahrzeugquerachse zulässt. Somit schafft die Kopplungseinrichtung eine in der Fahrzeuglängsachse steife oder starre Verbindung zwischen der Lenkstange und dem Obergestell, während in der Fahrzeugquerachse Relativbewegungen möglich sind, um die Lenkstange weiterhin um ihre Lenkachse verschwenken zu können.

Der Fahrzeugsitz kann nun wie bei der vorstehend genannten WO 2011/106767 A2 relativ zum Fahrgestell in der Fahrzeuglängsrichtung verstellbar sein. Hierzu ist der Fahrzeugsitz dann in der Fahrzeuglängsrichtung verstellbar am Obergestell angebracht. Alternativ dazu kann der Fahrzeugsitz jedoch auch fest mit dem Obergestell verbunden sein.

Gemäß einer vorteilhaften Ausführungsform kann die Kopplungseinrichtung einen stationären Bereich und einen mobilen Bereich aufweisen, die zur Zug- und Druckkraftübertragung miteinander gekoppelt sind. Zweckmäßig kann dabei der stationäre Bereich am Obergestell befestigt sein, während der mobile Bereich an der Lenkstange befestigt ist und mit der Lenkstange um die Lenkachse verschwenken und sich dabei in der Fahrzeugquerachse relativ zum Obergestell bewegen kann. Hierdurch ergibt sich eine besonders einfache Anbindung der Kopplungseinrichtung an die Lenkstange, ohne dass dabei die Gefahr einer Störkontur für den Fahrzeugführer entsteht.

Bei einer anderen Ausführungsform kann die Kopplungseinrichtung eine am Obergestell befestigte Führungsschiene und zumindest ein an der Führungsschiene in der Fahrzeugquerachse geführt verstellbares Gestellteil aufweisen, das mit der Führungsschiene zur Zug- und Druckkraftübertragung gekoppelt ist. Eine derartige Führungsschiene, die insbesondere zu dem vorstehend genannten stationären Bereich der Kopplungseinrichtung gezählt werden kann, zeichnet sich durch einen einfachen Aufbau bei höchster Stabilität aus. Ferner kann die Führungsschiene in ihrer Führungsrichtung eine besonders reibungsarme Führung für das jeweilige Gestellteil erzeugen, während sie quer dazu eine besonders hohe Kraftübertragung ermöglicht.

Gemäß einer vorteilhaften Weiterbildung kann das Gestellteil wenigstens einen Laufwagen aufweisen oder an mindestens einem Laufwagen befestigt sein. Der jeweilige Laufwagen kann nun an der Führungsschiene verstellbar gelagert sein. Ein derartiger Laufwagen ist zweckmäßig komplementär zur jeweiligen Führungsschiene gestaltet und kann sich in der Folge entlang der Führungsrichtung der Führungsschiene besonders reibungsarm bewegen, während er quer zur Führungsrichtung eine hohe Kraftübertragung zulässt. Um die Gefahr eines Verkantens des Laufwagens beim Verstellen entlang der Führungsschiene unter Last zu reduzieren, kann der Laufwagen entlang der Führungsschiene entsprechend groß dimensioniert sein. Ebenso ist denkbar zwei oder mehr Laufwagen nebeneinander an der Führungsschiene anzubringen, um eine breitere Abstützung zu bewirken. Insbesondere kann das Gestellteil mit zwei Laufwagen fest verbunden sein, die entlang der Führungsschiene vorzugsweise voneinander beabstandet sind. Alternativ können die Laufwagen auch unmittelbar aneinander anliegen.

Bei einer anderen Weiterbildung kann die Führungsschiene wenigstens eine Führungskontur aufweisen, während der jeweilige Laufwagen wenigstens ein Führungslager besitzt, mit dem der Laufwagen an wenigstens einer solchen Führungskontur verstellbar gelagert ist. Hierdurch kann eine besonders reibungsarme Verstellbarkeit realisiert werden. Gleichzeitig lässt sich dadurch auch eine spielarme bis spielfreie Beweglichkeit des jeweiligen Laufwagens entlang der Führungsschiene realisieren.

Zusätzlich oder alternativ kann der jeweilige Laufwagen so mit der Führungsschiene zusammenwirken, dass er entlang der Führungsschiene verstellbar ist, während er quer dazu fest mit der Führungsschiene verbunden ist. Über die feste Verbindung lassen sich insbesondere die hier relevanten Zug- und Druckkräfte zwischen Lenkstange und Obergestell übertragen.

Bei einer anderen vorteilhaften Ausführungsform kann die Führungsschiene als geradlinige, lineare Führungsschiene ausgestaltet sein. Hierdurch erhält die Führungsschiene einen besonders einfachen und somit preiswerten Aufbau. Bei einer anderen Ausführungsform kann die Führungsschiene auch gekrümmt, vorzugsweise kreisbogenförmig gekrümmt ausgestaltet sein. Der zugehörige Radius entspricht dann zweckmäßig dem Abstand der Führungsschiene zur Lenkachse.

Bei einer anderen vorteilhaften Ausführungsform kann die Kopplungseinrichtung ein an der Lenkstange befestigtes Lenkerteil und ein Ausgleichsgelenk aufweisen, mit dem das Lenkerteil und das Gestellteil miteinander gelenkig verbunden sind. Hierdurch lässt sich die Verschwenkbarkeit der Lenkstange um ihre Lenkachse relativ zum Obergestell innerhalb der Kopplungseinrichtung vergleichsweise einfach gewährleisten.

Bei einer Weiterbildung kann das Ausgleichsgelenk einen Führungszapfen und eine Zapfenaufnahme aufweisen, in welcher der Führungszapfen in der Fahrzeughochachse verstellbar gelagert ist. Vorzugsweise ist der Führungszapfen am Lenkerteil befestigt, während die Zapfenaufnahme am Gestellteil befestigt ist. Grundsätzlich ist jedoch auch eine umgekehrte Bauform denkbar, bei welcher der Führungszapfen am Gestellteil befestigt ist, während die Zapfenaufnahme am Lenkerteil befestigt ist. Durch die Verstellbarkeit des Führungszapfens in der Zapfenaufnahme parallel zur Fahrzeughochachse können im Bereich der Kopplungseinrichtung auftretende Relativbewegungen in der Hochachse kompensiert werden. Zu derartigen Relativbewegungen in der Hochachse kommt es beim Verschwenken der Lenkstange um die Lenkachse.

Gemäß einer anderen vorteilhaften Ausführungsform kann die Lenkstange in eine am Lenkerlager angeordnete Stangenaufnahme in der Fahrzeughochachse herausnehmbar eingesteckt sein. Hierdurch lässt sich die Lenkstange für einen vereinfachten Zuggang zum Fahrzeugsitz herausnehmen, was das Betreten und Verlassen des Fahrzeugs vereinfacht.

Besonders vorteilhaft ist nun eine Weiterbildung, bei der in Verbindung mit der steckbaren Lenkstange der Führungszapfen am Lenkerteil befestigt ist. Hierdurch lässt sich erreichen, dass beim Einsetzen der Lenkstange in die Stangenaufnahme gleichzeitig auch der Führungszapfen in die Führungsaufnahme eingesteckt werden kann. Zweckmäßig wird dabei der Führungszapfen von oben in die Zapfenaufnahme eingesteckt, so dass die Einführrichtung des Führungszapfens und die Einführrichtung der Lenkstange gleich sind.

Bei einer anderen vorteilhaften Ausführungsform kann das Ausgleichsgelenk ein Lager aufweisen, bei dem ein Lagerkörper in einem Lagergehäuse um eine parallel zur Fahrzeuglängsachse verlaufende Lagerachse schwenkbar gelagert ist. Der Lagerkörper bildet nun die Zapfenaufnahme oder weist diese auf, während das Lagergehäuse am Lenkerteil oder am Gestellteil befestigt ist. Beim Verschwenken der Lenkstange verändert das Lenkerteil seine Raumlage. Dies gilt dann auch für den jeweiligen Bestandteil des Ausgleichsgelenks, also entweder für den Führungszapfen oder für die Zapfenaufnahme. Im Unterschied dazu bleibt die räumliche Ausrichtung bezüglich der Hochachse bei den gestellseitigen Komponenten unverändert. Das hier vorgestellte Ausgleichsgelenk mit Lagerkörper und Lagergehäuse kann diese Veränderung der Raumlage kompensieren.

Besonders vorteilhaft kann der Lagerkörper eine kreiszylindrische oder eine kugelförmige Außenkontur aufweisen. Hierdurch besitzt das Ausgleichsgelenk einen besonders preiswerten Aufbau. Insbesondere kann es sich beim Ausgleichsgelenk um ein Flanschlager handeln, das sich besonders einfach am Lenkerteil oder am Gestellteil befestigen lässt.

Der Lagerzapfen besitzt zweckmäßig eine kreiszylindrische Außenkontur. Die Zapfenaufnahme kann ein in der Fahrzeugquerachse orientiertes Langloch sein. Bevorzugt ist jedoch eine Ausgestaltung, bei der die Zapfenaufnahme eine kreiszylindrische Innenkontur besitzt, in die der Führungszapfen quasi spielfrei einsetzbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine vereinfachte Seitenansicht eines dynamisch balancierenden Fahrzeugs,
- Fig. 2: eine vereinfachte Frontansicht des Fahrzeugs entsprechend einer Blickrichtung II in Fig. 1,
- Fig. 3: eine stark vereinfachte Schnittansicht des Fahrzeugs im Bereich einer Kopplungseinrichtung,
- Fig. 4: eine weitere Schnittansicht des Fahrzeugs im Bereich der Kopplungseinrichtung entsprechend Schnittlinien IV in Fig. 3.

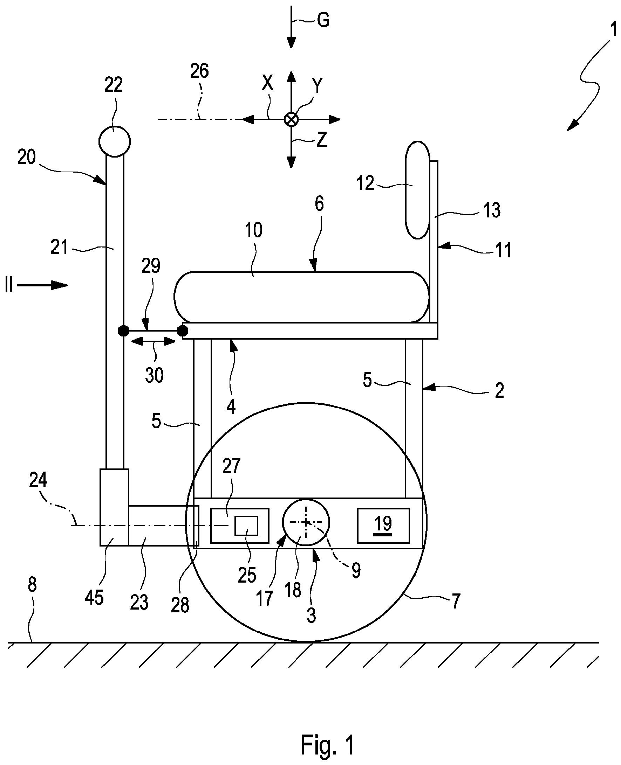

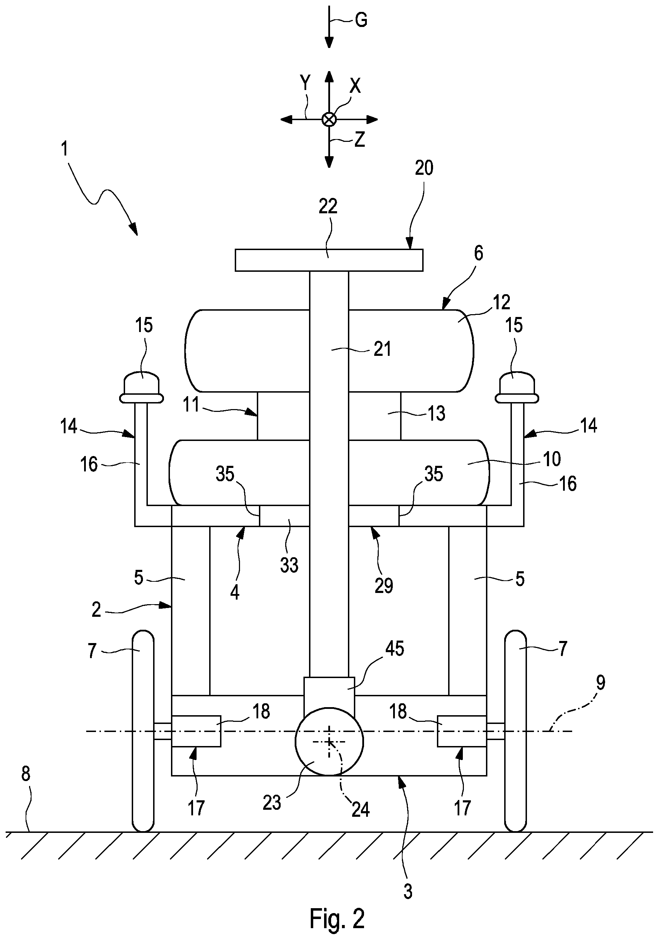

Entsprechend den Fig. 1 und 2 umfasst ein dynamisch balancierendes Fahrzeug 1 ein Fahrgestell 2, das ein Untergestell 3 und ein Obergestell 4 besitzt. Untergestell 3 und Obergestell 4 sind fest miteinander verbunden, beispielsweise über mehrere vertikale Träger 5, die somit ebenfalls zum Bauumfang des Fahrgestells 2 gehören. Das Fahrgestell 2 zeichnet sich durch eine hohe Stabilität und Steifigkeit bei vergleichsweise geringem Gewicht aus.

Das Fahrzeug 1 besitzt eine Längsachse X oder Längsrichtung X, die im Gebrauchszustand des Fahrzeugs 1 horizontal verläuft. Ferner besitzt das Fahrzeug 1 eine Querachse Y oder Querrichtung Y, die senkrecht zur Fahrzeuglängsachse X und im Gebrauchszustand des Fahrzeugs 1 ebenfalls horizontal verläuft. Schließlich besitzt das Fahrzeug 1 außerdem eine Hochachse Z oder Hochrichtung Z, die sich senkrecht zur Fahrzeuglängsachse X und senkrecht zur Fahrzeugquerachse Y erstreckt und die im Gebrauchszustand des Fahrzeugs 1 vertikal verläuft.

Das Obergestell 4 ist bezüglich der Fahrzeughochachse Z oberhalb des Untergestells 3 angeordnet. Das Obergestell 4 dient zur Aufnahme eines Fahrzeugsitzes 6 für einen Fahrzeugführer. Das Untergestell 3 dient zur Aufnahme verschiedener Komponenten des Fahrzeugs 1, die nachfolgend noch erläutert werden. Das Untergestell 3 ist dabei zur Aufnahme besagter Komponenten bevorzugt als Wanne oder Gehäuse ausgestaltet.

Das Fahrzeug 1 weist zumindest zwei Räder 7 auf, die zum Abstützen des Fahrzeugs 1 auf einem Untergrund 8 dienen, auf dem das Fahrzeug 1 steht oder fährt. Beim gezeigten Beispiel besitzt das Fahrzeug 1 genau zwei Räder 7 zum Abstützen des Untergestells 3 auf dem Untergrund 8. Theoretisch sind auch drei oder mehr Räder 7 denkbar. Wesentlich ist, dass die Räder 7 um eine gemeinsame Raddrehachse 9 drehbar am Fahrgestell 2 angeordnet sind, die parallel zur Fahrzeugquerachse Y verläuft. Im gezeigten Beispiel sind die Räder 7 am Untergestell 3 drehbar gelagert und zwar an zwei in der Fahrzeugquerachse Y voneinander abgewandten Seiten des Untergestells 3.

Der zuvor genannte Fahrzeugsitz 6 umfasst ein Sitzkissen 10, das vom Obergestell 4 getragen ist. Im einfachsten Fall ist das Sitzkissen 10 fest mit dem Obergestell 4 verbunden. Bei einer anderen, hier nicht gezeigten Ausführungsform kann das Sitzkissen 10 dagegen relativ zum Obergestell 4 in der Fahrzeuglängsachse X verstellbar angeordnet sein. Der Fahrzeugsitz 6 weist außerdem eine Rückenlehne 11 auf, die ein Rückenpolster 12 und einen Rückenpolsterhalter 13 aufweist, mit dem das Rückenpolster 12 am Obergestell 4 befestigt ist. Außerdem können zwei in Fig. 2 wiedergegebene Armlehnen 14 vorgesehen sein, die jeweils ein Armlehnenpolster 15 und einen Armlehnenpolsterhalter 16 besitzen, der das Armlehnenpolster 15 fest mit dem Obergestell 4 verbindet. In Fig. 1 sind diese Armlehnen 14 zur besseren Übersichtlichkeit weggelassen. Zumindest eine dieser Armlehnen 14 kann, z.B. um eine parallel zur Fahrzeuglängsachse X verlaufende Schwenkachse, abklappbar konfiguriert sein.

Das Fahrzeug 1 umfasst ferner eine Antriebseinrichtung 17, die mit den Rädern 7 gekoppelt ist und die zum dynamischen Balancieren des Fahrzeugs 1 sowie zum Antreiben, zum Bremsen und zum Lenken des Fahrzeugs 1 dient. Zweckmäßig umfasst die Antriebseinrichtung 17 für jedes der beiden Räder 7 einen Elektromotor 18 sowie wenigstens eine Batterie 19 als elektrischen Energiespeicher bzw. zur Stromversorgung der Motoren 18. Sofern mehr als drei Räder 7 vorgesehen sein sollten, ist die Antriebseinrichtung 17 mit mindestens zwei dieser Räder 7 gekoppelt. Dann sind auch wenigstens zwei Räder 7 mit je einem Elektromotor 18 ausgestattet.

Des Weiteren weist das Fahrzeug 1 eine Lenkeinrichtung 20 auf, die zum Erzeugen von Lenkbefehlen vorgesehen ist. Hierzu weist die Lenkeinrichtung 20 eine Lenkstange 21 auf, die vom Fahrzeugführer betätigbar ist. Hierzu ist die Lenkstange 21 an ihrem oberen Ende zweckmäßig mit einem Handgriff 22 ausgestattet, an dem der Fahrzeugführer die Lenkstange 21 angreifen und betätigen kann. Die Lenkstange 21 ist an ihrem unteren Ende über ein Lenkerlager 23 am Untergestell 3 um eine Lenkachse 24 schwenkbar gelagert, die sich parallel zur Fahrzeuglängsachse X erstreckt.

Das Fahrzeug 1 ist außerdem mit einer Neigungssensorik 25 ausgestattet, die nur in Fig. 1 angedeutet ist und die zum Ermitteln eines Neigungswinkels dient. Besagter Neigungswinkel wird zwischen der Fahrzeuglängsachse X und einer in Fig. 1 angedeuteten Horizontalebene 26 aufgespannt, die sich senkrecht zur Gravitationsrichtung G erstreckt, die in den Fig. 1 und 2 durch einen Pfeil angedeutet ist. Die Gravitationsrichtung G weist auf den Erdmittelpunkt. Des Weiteren ist eine Steuereinrichtung 27 vorgesehen, die ebenfalls nur in Fig. 1 angedeutet ist und die auf geeignete Weise mit der Lenkeinrichtung 20 und mit der Neigungssensorik 25 gekoppelt ist. Im Beispiel ist die Neigungssensorik 25 in die Steuereinrichtung 27 integriert. Die Lenkeinrichtung 20 kann insbesondere am Lenkerlager 23 eine Lenkwinkelsensorik 28 aufweisen, um einen Lenkwinkel zu erfassen. Der Lenkwinkel ist dabei derjenige Winkel, den die Lenkstange 21 gegenüber einer Vertikalrichtung aufspannt. Im gezeigten Beispiel der Fig. 2 steht die Lenkstange 21 vertikal, so dass der Lenkwinkel den Wert 0° besitzt. Im gezeigten Beispiel der Fig. 1 ist das Fahrzeug 1 bzw. dessen Gestell 2 horizontal ausgerichtet, so dass sich die Fahrzeuglängsachse X in der Horizontalebene 26 erstreckt und der Neigungswinkel den Wert 0° besitzt.

Die Steuereinrichtung 27 dient zum Erzeugen von Antriebsbefehlen und Bremsbefehlen abhängig vom Neigungswinkel. Ferner ist die Steuereinrichtung 27 so ausgestaltet, dass sie die Antriebseinrichtung 17 bzw. deren Elektromotoren 18 abhängig von den Lenkbefehlen, abhängig von den Antriebsbefehlen und abhängig von den Bremsbefehlen ansteuern kann.

Des Weiteren ist das Fahrzeug 1 mit einer Kopplungseinrichtung 29 ausgestattet, die in den Fig. 1 und 2 nur symbolisch angedeutet ist. Die Kopplungseinrichtung 29 verbindet das Obergestell 4 mit der Lenkstange 21, derart, dass die Kopplungseinrichtung 29 in der Fahrzeuglängsachse X Zug- und Druckkräfte übertragen kann. Eine entsprechende Zug- und Druckkraftübertragung ist in Fig. 1 durch einen Doppelpfeil 30 angedeutet. Ferner ist die Kopplungseinrichtung 29 so ausgestaltet, dass sie Relativbewegungen zwischen der Lenkstange 21 und dem Obergestell 4 in der Fahrzeugquerachse Y zulässt. Diese Relativbewegungen ergeben sich bei einem Verschwenken der Lenkstange 21 um die Lenkachse 24, also beim Lenken des Fahrzeugs 1. Mit Hilfe der Kopplungseinrichtung 29 kann der Fahrzeugführer sich am Handgriff 22 nach vorn ziehen, um seinen Schwerpunkt nach vorn zu verlagern, oder nach hinten drücken, um seinen Schwerpunkt nach hinten zu verlagern. Je nach Dynamik, mit welcher der Fahrzeugführer diese Manöver durchführt, werden mehr oder weniger große Zug- oder Druckkräfte über den Handgriff 22 in die Lenkstange 21 eingeleitet. Über die Kopplungseinrichtung 29 werden diese Zug- und Druckkräfte am Obergestell 4 abgestützt, wodurch das Lenkerlager 23 signifikant entlastet wird. Insbesondere können hohe Biegemomente im Lenkerlager 23 um eine durch das Lenkerlager 23 verlaufende Horizontalachse weitgehend vermieden werden. Hierdurch wird das Lenkerlager 23 geschont.

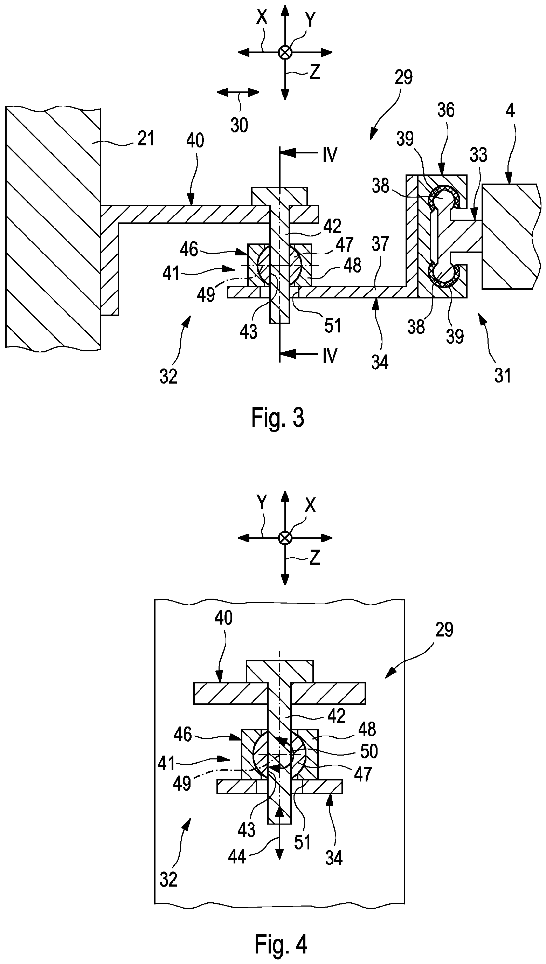

Nachfolgend wird mit Bezug auf die Fig. 3 und 4 näher auf die Kopplungseinrichtung 29 eingegangen.

Gemäß den Fig. 3 und 4 besitzt die Kopplungseinrichtung 29 generell einen stationären Bereich 31 und einen mobilen Bereich 32, die zur Zug- und Druckkraftübertragung 30 miteinander gekoppelt sind. Der stationäre Bereich 31 ist am Obergestell 4 befestigt. Der mobile Bereich 32 ist an der Lenkstange 21 befestigt. Somit ist der mobile Bereich 32 mit der Lenkstange 21 um die Lenkachse 24 verschwenkbar, wobei sich der mobile Bereich 32 in der Fahrzeugquerachse Y relativ zum Obergestell 4 bewegt.

Bei der hier vorgestellten, bevorzugten Ausgestaltung der Kopplungseinrichtung 29 besitzt die Kopplungseinrichtung 29 eine am Obergestell 4 befestigte Führungsschiene 33 und ein an der Führungsschiene 33 in der Fahrzeugquerachse Y geführt verstellbares Gestellteil 34. Das Gestellteil 34 ist entlang der Führungsschiene 33, also im Wesentlichen in der Fahrzeugquerachse Y verstellbar und außerdem mit der Führungsschiene 33 zur Zug- und Druckkraftübertragung 30 gekoppelt. Beim hier gezeigten, bevorzugten Beispiel ist die Führungsschiene 33 als geradlinige, lineare Führungsschiene 33 ausgestaltet, so dass sie sich parallel zur Fahrzeugquerachse Y erstreckt. In der in Figur 2 gezeigten Mittelstellung der Lenkstange 21 ist die Kopplungseinrichtung 29 weitgehend verdeckt. Insbesondere ist nur die Führungsschiene 33 erkennbar, da sich das Gestellteil 34 in der Blickrichtung hinter der Lenkstange 21 befindet. Der Verstellweg des Gestellteils 34 entlang der Führungsschiene 33 kann durch seitliche Endanschläge 35 begrenzt sein, die an der Führungsschiene 33 bzw. am Untergestell 4 im Bereich der Längsenden der Führungsschiene 33 angeordnet sind.

Zweckmäßig ist das Gestellteil 34 mit mindestens einem Laufwagen 36 ausgestattet, der an der Führungsschiene 33 verstellbar gelagert ist. Beispielsweise handelt es sich beim Laufwagen 36 um ein separates Bauteil, das optimal an die Führungsschiene 33 angepasst ist. Das Gestellteil 34 besitzt dann zweckmäßig einen Trägerkörper 37, an dem der Laufwagen 36 befestigt ist. Geeignete Befestigungsmittel sind hier nicht dargestellt. Der jeweilige Laufwagen 36 kann grundsätzlich auch am übrigen Gestellteil 34 integral ausgeformt sein. Damit Lenkbewegungen auch dann besonders reibungsarm durchgeführt werden können, wenn gleichzeitig mehr oder weniger hohe Zug- oder Drückkräfte übertragen werden, kann der Laufwagen 36 in der Schienenlängsrichtung, also hier in der Fahrzeugquerrichtung Y entsprechend groß dimensioniert werden, um eine breite Abstützung zu erzielen. Ebenso ist denkbar, zwei Laufwagen 36 in der Schienenlängsrichtung nebeneinander mit oder ohne Abstand anzuordnen, um eine besonders breite Abstützung zu erreichen.

Die Führungsschiene 33, die ebenfalls auf geeignete Weise am Obergestell 4 befestigt ist, besitzt im gezeigten Beispiel zwei Führungskonturen 38, zum Beispiel jeweils mit einem kreisbogenförmigen Profil, das sich über mehr als 180° erstreckt. Der jeweilige Laufwagen 36 weist für jede Führungskontur 38 zumindest ein Führungslager 39 auf, das komplementär zur Führungskontur 38 geformt ist und mit dem der Laufwagen 36 an der jeweiligen Führungskontur 38 gelagert ist, so dass er entlang der Führungskontur 38 reibungsarm geführt ist. Ferner wirkt der Laufwagen 36 mit der Führungsschiene 33 so zusammen, dass er entlang der Führungsschiene 33 verstellbar ist, während er quer dazu fest mit der Führungsschiene 33 verbunden ist. Im Beispiel ist die Führungsschiene 33 parallel zur Fahrzeugquerachse Y orientiert, so dass der Laufwagen 36 in der Fahrzeugquerachse Y entlang der Führungsschiene 33 verstellbar ist. Im Unterschied dazu ist der Laufwagen 36 in der Fahrzeuglängsachse X und in der Fahrzeughochachse Z fest mit der Führungsschiene 33 verbunden, was hier im Wesentlichen durch einen intensiven Formschluss realisiert ist.

Die hier vorgestellte Kopplungseinrichtung 29 weist außerdem ein an der Lenkstange 21 befestigtes Lenkerteil 40 auf sowie ein Ausgleichsgelenk 41 auf. Das Ausgleichsgelenk 41 verbindet das Lenkerteil 40 mit dem Gestellteil 34 gelenkig. Im Beispiel weist das Ausgleichsgelenk 41 einen Führungszapfen 42 auf sowie eine Zapfenaufnahme 43. In der Zapfenaufnahme 43 ist der Führungszapfen 42 in der Fahrzeughochachse Z entsprechend einem Doppelpfeil 44 verstellbar gelagert. Im gezeigten Beispiel ist der Führungszapfen 42 am Lenkerteil 40 befestigt, während die Zapfenaufnahme 43 am Gestellteil 34 befestigt ist. Grundsätzlich ist auch eine umgekehrte Bauform denkbar. Der Führungszapfen 42 kann mit dem Lenkerteil 40 verschraubt oder auf sonstige geeignete Weise fest verbunden sein. Entsprechendes gilt für die Zapfenaufnahme 43 bzw. für ein die Zapfenaufnahme 43 enthaltendes Bauteil. Zweckmäßig sind Führungszapfen 42 und Zapfenaufnahme 43 so angeordnet, dass der Führungszapfen 42 von oben in die Zapfenaufnahme 43 einsteckbar ist bzw. dass die Zapfenaufnahme 43 von oben auf den Führungszapfen 42 aufsteckbar ist. Hierdurch kann die Lenkstange 21 besonders einfach für einen verbesserten Zugang zum Fahrzeugsitz 6 demontiert und montiert werden. Gemäß den Fig. 1 und 2 ist nämlich zweckmäßig vorgesehen, dass die Lenkstange 21 in eine Stangenaufnahme 45 herausnehmbar eingesteckt werden kann, und zwar ebenfalls wieder von oben. Die Stangenaufnahme 45 ist dabei am Lenkerlager 43 angebracht.

Zurückkommend auf die Fig. 3 und 4 besitzt das Ausgleichsgelenk 41 gemäß der hier gezeigten bevorzugten Ausführungsform zweckmäßig ein Lager 46, das seinerseits einen Lagerkörper 47 und ein Lagergehäuse 48 aufweist. Der Lagerkörper 47 ist im Lagergehäuse 48 um eine parallel zur Fahrzeuglängsachse X verlaufende Lagerachse 49 schwenkbar gelagert. Eine entsprechende Schwenkverstellbarkeit ist in Fig. 4 durch einen Doppelpfeil 50 angedeutet. Der Lagerkörper 47 bildet bzw. enthält die Zapfenaufnahme 43. Das Lagergehäuse 48 ist hier am Gestellteil 34 befestigt. Entsprechende Befestigungsmittel, wie zum Bespiel Schrauben, sind hier nicht dargestellt. Im gezeigten Beispiel ist der Lagerkörper 47 als Kugelkörper ausgestaltet, so dass er eine kugelförmige Außenkontur besitzt. Alternativ dazu könnte der Lagerkörper 47 auch als Zylinderkörper mit kreiszylindrischer Außenkontur ausgestaltet sein. Die Längsmittelachse dieses zylindrischen Lagerkörpers 47 erstreckt sich dann konzentrisch zur Lagerachse 49.

Das Gestellteil 34 besitzt im Bereich des Ausgleichsgelenks 41 eine Durchgangsöffnung 51, durch die der Führungszapfen 42 hindurchragt. Dabei ist die Durchgangsöffnung 51 hinsichtlich ihres Querschnitts oder Durchmessers größer dimensioniert als der Führungszapfen 42, wodurch Kollisionen zwischen dem Führungszapfen 42 und dem Gestellteil 34 vermieden werden können, wenn der Führungszapfen 42 beim Lenken durch die Verschwenkung der Lenkstange 41 um die Lenkachse 24 im Lager 46 um die Lagerachse 49 verschwenkt. Es ist klar, dass grundsätzlich auch andere Ausgestaltungen für die Kopplungseinrichtung 29 denkbar sind. Die hier vorgestellte Ausführungsform zeichnet sich jedoch durch eine sichere Funktionsweise bei preiswertem Aufbau aus.

## Patentansprüche

1. Dynamisch balancierendes Fahrzeug,
- mit einem Fahrgestell (2), das ein Untergestell (3) und ein fest damit verbundenes Obergestell (4) aufweist, das bezüglich einer Fahrzeughochachse (Z) über dem Untergestell (3) angeordnet ist,
- mit einem vom Obergestell (4) getragenen Fahrzeugsitz (6) für einen Fahrzeugführer,
- mit mindestens zwei Rädern (7) zum Abstützen des Untergestells (3) auf einem Untergrund (8), die um eine parallel zu einer Fahrzeugquerachse (Y) verlaufende gemeinsame Raddrehachse (9) drehbar am Untergestell (3) gelagert sind,
- mit einer mit den Rädern (7) gekoppelten Antriebseinrichtung (17) zum dynamischen Balancieren des Fahrzeugs (1) sowie zum Antreiben, Bremsen und Lenken des Fahrzeugs (1),
- mit einer Lenkeinrichtung (20) zum Erzeugen von Lenkbefehlen, die eine vom Fahrzeugführer betätigbare Lenkstange (21) aufweist, die über ein Lenkerlager (23) um eine parallel zu einer Fahrzeuglängsachse (X) verlaufende Lenkachse (24) schwenkbar gelagert ist,
**dadurch gekennzeichnet,**
- **dass** die Lenkstange (21) über das Lenkerlager (23) am Untergestell (3) um die Lenkachse (24) schwenkbar gelagert ist,
- **dass** eine Kopplungseinrichtung (29) vorgesehen ist, die das Obergestell (4) zur Zug- und Druckkraftübertragung (30) in der Fahrzeuglängsachse (X) mit der Lenkstange (21) verbindet und die Relativbewegungen zwischen der Lenkstange (21) und dem Obergestell (4) in der Fahrzeugquerachse (Y) zulässt.

2. Fahrzeug nach Anspruch 1,
**dadurch gekennzeichnet,**
- **dass** die Kopplungseinrichtung (29) einen stationären Bereich (31) und einen mobilen Bereich (32) aufweist, die zur Zug- und Druckkraftübertragung (30) miteinander gekoppelt sind,
- **dass** der stationäre Bereich (31) am Obergestell (4) befestigt ist,
- **dass** der mobile Bereich (32) an der Lenkstange (21) befestigt ist und mit der Lenkstange (21) um die Lenkachse (24) verschwenken und sich dabei in der Fahrzeugquerachse (Y) relativ zum Obergestell (4) bewegen kann,

3. Fahrzeug nach Anspruch 1 oder 2,
**dadurch gekennzeichnet,**
**dass** die Kopplungseinrichtung (29) eine am Obergestell (4) befestigte Führungsschiene (33) und ein an der Führungsschiene (33) in der Fahrzeugquerachse (Y) geführt verstellbares Gestellteil (34) aufweist, das mit der Führungsschiene (33) zur Zug- und Druckkraftübertragung (30) gekoppelt ist.

4. Fahrzeug nach Anspruch 3,
**dadurch gekennzeichnet,**
- **dass** das Gestellteil (34) zumindest einen Laufwagen (36) aufweist oder an zumindest einem Laufwagen (36) befestigt ist,
- **dass** der jeweilige Laufwagen (36) an der Führungsschiene (33) verstellbar gelagert ist.

5. Fahrzeug nach Anspruch 4,
**dadurch gekennzeichnet,**
- **dass** die Führungsschiene (33) wenigstens eine Führungskontur (38) aufweist,
- **dass** der jeweilige Laufwagen (36) wenigstens ein Führungslager (39) aufweist, mit dem der jeweilige Laufwagen (36) an wenigstens einer solchen Führungskontur (38) verstellbar gelagert ist.

6. Fahrzeug nach Anspruch 4 oder 5,
**dadurch gekennzeichnet,**
**dass** der jeweilige Laufwagen (36) so mit der Führungsschiene (33) zusammenwirkt, dass er entlang der Führungsschiene (33) verstellbar ist, während er quer dazu fest mit der Führungsschiene (33) verbunden ist.

7. Fahrzeug nach einem der Ansprüche 3 bis 6,
**dadurch gekennzeichnet,**
**dass** die Führungsschiene (33) als geradlinige, lineare Führungsschiene (33) ausgestaltet ist.

8. Fahrzeug nach einem der Ansprüche 3 bis 7,
**dadurch gekennzeichnet,**
**dass** die Kopplungseinrichtung (29) ein an der Lenkstange (21) befestigtes Lenkerteil (40) und ein Ausgleichsgelenk (41) aufweist, mit dem das Lenkerteil (40) und das Gestellteil (34) miteinander gelenkig verbunden sind.

9. Fahrzeug nach Anspruch 8,
**dadurch gekennzeichnet,**
- **dass** das Ausgleichsgelenk (41) einen Führungszapfen (42) und eine Zapfenaufnahme (43) aufweist, in welcher der Führungszapfen (42) in der Fahrzeughochachse (Z) verstellbar gelagert ist,
- **dass** der Führungszapfen (42) an dem einen von Lenkerteil (40) und Gestellteil (34) befestigt ist,
- **dass** die Zapfenaufnahme (43) an dem anderen von Lenkerteil (40) und Gestellteil (34) vorgesehen ist.

10. Fahrzeug nach einem der Ansprüche 1 bis 9,
**dadurch gekennzeichnet,**
**dass** die Lenkstange (21) in eine am Lenkerlager (23) angeordnete Stangenaufnahme (45) in der Fahrzeughochachse (Z) herausnehmbar eingesteckt ist.

11. Fahrzeug nach den Ansprüchen 9 und 10,
**dadurch gekennzeichnet,**
- **dass** der Führungszapfen (42) am Lenkerteil (40) befestigt ist und in der Fahrzeughochachse (Z) herausnehmbar in die Zapfenaufnahme (43) eingesteckt ist, oder
- **dass** die Zapfenaufnahme (43) am Lenkerteil (40) befestigt ist und in der Fahrzeughochachse (Z) auf den Führungszapfen (42) abnehmbar aufgesteckt ist.

12. Fahrzeug nach Anspruch 9 oder 11,
**dadurch gekennzeichnet,**
- **dass** das Ausgleichsgelenk (41) ein Lager (46) aufweist, bei dem ein Lagerkörper (47) in einem Lagergehäuse (48) um eine parallel zur Fahrzeuglängsachse (X) verlaufende Lagerachse (49) schwenkbar gelagert ist,
- **dass** der Lagerkörper (47) die Zapfenaufnahme (43) enthält oder bildet,
- **dass** das Lagergehäuse (48) am Lenkerteil (40) oder am Gestellteil (34) befestigt ist.

13. Fahrzeug nach Anspruch 12,
**dadurch gekennzeichnet,**
**dass** der Lagerkörper (47) eine kreiszylindrische oder kugelförmige Außenkontur aufweist.

14. Fahrzeug nach einem der Ansprüche 1 bis 13,
**dadurch gekennzeichnet,**
- **dass** eine Neigungssensorik (25) zum Ermitteln eines Neigungswinkels der Fahrzeuglängsachse (X) gegenüber einer sich senkrecht zur Gravitationsrichtung (G) erstreckenden Horizontalebene (26) vorgesehen ist,
- **dass** eine mit der Lenkeinrichtung (20) und mit der Neigungssensorik (25) gekoppelte Steuereinrichtung (27) zum Erzeugen von Antriebsbefehlen und Bremsbefehlen abhängig vom Neigungswinkel und zum Ansteuern der Antriebseinrichtung (17) abhängig von den Lenkbefehlen, den Antriebsbefehlen und den Bremsbefehlen vorgesehen ist.

## Claims

1. A dynamically balancing vehicle
- comprising a chassis (2), which has a lower frame (3) and an upper frame (4), which is fixedly connected to said lower frame and which is arranged above the lower frame (3) in relation to a vehicle vertical axis (Z),
- comprising a vehicle seat (6), which is supported by the upper frame (4), for a vehicle driver,
- comprising at least two wheels (7) for supporting the lower frame (3) on an underlying surface (8), which wheels are mounted on the lower frame (3) so as to be rotatable about a common wheel axis of rotation (9), which runs parallel to a vehicle transverse axis (Y),
- comprising a drive device (17), which is coupled to the wheels (7), for dynamically balancing the vehicle (1) and for driving, braking and steering the vehicle (1),
- comprising a steering device (20) for generating steering commands, which has a steering rod (21), which can be operated by the vehicle driver and which, by way of a steering mount (23), is mounted so as to be pivotable about a steering axis (24), which runs parallel to a vehicle longitudinal axis (X),
**characterized in**
- **that** the steering rod (21) is, by way of the steering mount (23), mounted on the lower frame (3) so as to be pivotable about the steering axis (24) ,
- **that** a coupling device (29) is provided, which connects the upper frame (4) to the steering rod (21) for transmission of tensile and compressive forces (30) in the vehicle longitudinal axis (X) and which permits relative movements between the steering rod (21) and the upper frame (4) in the vehicle transverse axis (Y).

2. The vehicle according to claim 1,
**characterized in**
- **that** the coupling device (29) has a stationary area (31) and a mobile area (32), which are coupled to one another for transmission of tensile and compressive forces (30),
- **that** the stationary area (31) is fastened to the upper frame (4),
- **that** the mobile area (32) is fastened to the steering rod (21) and can pivot with the steering rod (21) about the steering axis (24) and can thereby move relative to the upper frame (4) in the vehicle transverse axis (Y).

3. The vehicle according to claim 1 or 2,
**characterized in**
**that** the coupling device (29) has a guide rail (33), which is fastened to the upper frame (4), and an adjustable frame part (34), which is guided on the guide rail (33) in the vehicle transverse axis (Y) and which is coupled to the guide rail (33) for the tensile and compressive force transmission (30).

4. The vehicle according to claim 3,
**characterized in**
- **that** the frame part (34) has at least one carriage (36) or is fastened to at least one carriage (36),
- **that** the respective carriage (36) is mounted on the guide rail (33) so as to be adjustable.

5. The vehicle according to claim 4,
**characterized in**
- **that** the guide rail (33) has at least one guide contour (38),
- **that** the respective carriage (36) has at least one guide mount (39), by means of which the respective carriage (36) is mounted on at least one such guide contour (38) so as to be adjustable.

6. The vehicle according to claim 4 or 5,
**characterized in**
**that** the respective carriage (36) cooperates with the guide rail (33) in such a way that it can be adjusted along the guide rail (33), while it is fixedly connected to the guide rail (33) in the transverse direction thereto.

7. The vehicle according to one of claims 3 to 6,
**characterized in**
**that** the vehicle rail (33) is designed as straight, linear guide rail (33).

8. The vehicle according to one of claims 3 to 7,
**characterized in**
**that** the coupling device (29) has a handlebar part (40), which is fastened to the steering rod (21), and a compensating joint (41), by means of which the handlebar part (40) and the frame part (34) are connected to one another in an articulated manner.

9. The vehicle according to claim 8,
**characterized in**
- **that** the compensating joint (41) has a guide pin (42) and a pin receiver (43), in which the guide pin (42) is mounted so as to be adjustable in the vehicle vertical axis (Z),
- **that** the guide pin (42) is fastened to the one of handlebar part (40) and frame part (34),
- **that** the pin receiver (43) is provided on the other one of handlebar part (40) and frame part (34) .

10. The vehicle according to one of claims 1 to 9,
**characterized in**
**that** the steering rod (21) is inserted into a rod receiver (45), which is arranged on the steering mount (23), so as to be removable in the vehicle vertical axis (Z).

11. The vehicle according to claim 9 and 10,
**characterized in**
- **that** the vehicle pin (42) is fastened to the handlebar part (40) and is inserted into the rod receiver (43) so as to be removable in the vehicle vertical axis (Z), or
- **that** the pin receiver (43) is fastened to the handlebar part (40) and is attached to the guide pin (42) so as to be removable in the vehicle vertical axis (Z).

12. The vehicle according to claim 9 or 11,
**characterized in**
- **that** the compensating joint (41) has a mount (46), in the case of which a mounting body (47) is mounted in a mounting housing (48) so as to be pivotable about a mounting axis (49), which runs parallel to the vehicle longitudinal axis (X),
- **that** the mounting body (47) includes or forms the pin receiver (43),
- **that** the mounting housing (48) is fastened to the handlebar part (40) or to the frame part (34).

13. The vehicle according to claim 12,
**characterized in**
**that** the mounting body (47) has a circular cylindrical or a spherical outer contour.

14. The vehicle according to one of claims 1 to 13,
**characterized in**
- **that** provision is made for an inclination sensor system (25) for determining an angle of inclination of the vehicle longitudinal axis (X) with respect to a horizontal plane (26), which extends vertically to the gravitational direction (G),
- **that** provision is made for a control device (27), which is coupled to the steering device (20) and to the inclination sensor system (25), for generating drive commands and brake commands as a function of the angle of inclination and for controlling the drive device (17) as a function of the steering commands, the drive commands and the brake commands.

## Revendications

1. Véhicule à équilibrage dynamique,
- avec un cadre (2) qui présente un cadre inférieur (3) et un cadre supérieur (4) relié fixement à celui-ci qui est agencé par rapport à un axe vertical de véhicule (Z) au-dessus du cadre inférieur (3),
- avec un siège de véhicule (6) porté par le cadre supérieur (4) pour un conducteur de véhicule,
- avec au moins deux roues (7) pour l'appui du cadre inférieur (3) sur un sol (8), qui sont logées de manière à pouvoir tourner autour d'un axe de rotation de roue (9) commun s'étendant parallèlement à un axe transversal de véhicule (Y) au niveau du cadre inférieur (3),
- avec un dispositif d'entraînement (17) couplé aux roues (7) pour l'équilibrage dynamique du véhicule (1) ainsi que pour l'entraînement, le freinage et la direction du véhicule (1),
- avec un dispositif de direction (20) pour la génération d'ordres de direction, qui présente une barre de direction (21) actionnable par le conducteur de véhicule qui est logée de manière pivotante par le biais d'un palier de direction (23) autour d'un axe de direction (24) s'étendant parallèlement à un axe longitudinal de véhicule (X), **caractérisé en ce**
- **que** la barre de direction (21) est logée de manière pivotante par le biais du palier de direction (23) au niveau du cadre inférieur (3) autour de l'axe de direction (24),
- **qu'**un dispositif de couplage (29) est prévu, lequel relie le cadre supérieur (4) pour la transmission de force de traction et de pression (30) dans l'axe longitudinal de véhicule (X) à la barre de direction (21) et autorise les mouvements relatifs entre la barre de direction (21) et le cadre supérieur (4) dans l'axe transversal de véhicule (Y).

2. Véhicule selon la revendication 1,
**caractérisé en ce**
- **que** le dispositif de couplage (29) présente une zone stationnaire (31) et une zone mobile (32) qui sont couplées entre elles pour la transmission de force de traction et de pression (30),
- **que** la zone stationnaire (31) est fixée au cadre supérieur (4),
- **que** la zone mobile (32) est fixée à la barre de direction (21) et peut pivoter avec la barre de direction (21) autour de l'axe de direction (24) et ainsi se déplacer dans l'axe transversal de véhicule (Y) par rapport au cadre supérieur (4).

3. Véhicule selon la revendication 1 ou 2,
**caractérisé en ce**
**que** le dispositif de couplage (29) présente un rail de guidage (33) fixé au cadre supérieur (4) et une partie de cadre (34) réglable de manière guidée au niveau du rail de guidage (33) dans l'axe transversal de véhicule (Y) qui est couplée avec le rail de guidage (33) pour la transmission de force de traction et de pression (30).

4. Véhicule selon la revendication 3,
**caractérisé en ce**
- **que** la partie de cadre (34) présente au moins un chariot (36) ou est fixée à au moins un chariot (36),
- **que** le chariot (36) respectif est logé de manière réglable au niveau du rail de guidage (33).

5. Véhicule selon la revendication 4,
**caractérisé en ce**
- **que** le rail de guidage (33) présente au moins un contour de guidage (38),
- **que** le chariot (36) respectif présente au moins un palier de guidage (39), avec lequel le chariot (36) respectif est logé de manière réglable au niveau d'au moins un tel contour de guidage (38).

6. Véhicule selon la revendication 4 ou 5,
**caractérisé en ce**
**que** le chariot (36) respectif coagit avec le rail de guidage (33) de sorte qu'il soit réglable le long du rail de guidage (33) alors qu'il est relié transversalement à celui-ci fixement au rail de guidage (33).

7. Véhicule selon l'une quelconque des revendications 3 à 6,
**caractérisé en ce**
**que** le rail de guidage (33) est configuré comme rail de guidage (33) linéaire, rectiligne.

8. Véhicule selon l'une quelconque des revendications 3 à 7,
**caractérisé en ce**
**que** le dispositif de couplage (29) présente une partie de direction (40) fixée à la barre de direction (21) et une articulation de compensation (41) avec laquelle la partie de direction (40) et la partie de cadre (34) sont reliées entre elles de manière articulée.

9. Véhicule selon la revendication 8,
**caractérisé en ce**
- **que** l'articulation de compensation (41) présente un tenon de guidage (42) et un logement de tenon (43) dans lequel le tenon de guidage (42) est logé de manière réglable dans l'axe vertical de véhicule (Z),
- **que** le tenon de guidage (42) est fixé à l'une de la partie de direction (40) et la partie de cadre (34),
- **que** le logement de tenon (43) est prévu au niveau de l'autre de la partie de direction (40) et la partie de cadre (34).

10. Véhicule selon l'une quelconque des revendications 1 à 9,
**caractérisé en ce**
- **que** la barre de direction (21) est enfichée de manière retirable dans un logement de barre (45) agencé au niveau du palier de direction (23) dans l'axe vertical de véhicule (Z).

11. Véhicule selon les revendications 9 et 10,
**caractérisé en ce**
- **que** le tenon de guidage (42) est fixé à la partie de direction (40) et est enfiché, dans l'axe vertical de véhicule (Z), de manière retirable dans le logement de tenon (43), ou
- **que** le logement de tenon (43) est fixé à la partie de direction (40) et est enfiché de manière amovible, dans l'axe vertical de véhicule (Z), sur le tenon de guidage (42).

12. Véhicule selon la revendication 9 ou 11,
**caractérisé en ce**
- **que** l'articulation de compensation (41) présente un palier (46) pour lequel un corps de palier (47) est logé de manière pivotante dans un boîtier de palier (48) autour d'un axe de palier (49) s'étendant parallèlement à l'axe longitudinal de véhicule (X),
- **que** le corps de palier (47) contient ou forme le logement de tenon (43),
- **que** le boîtier de palier (48) est fixé à la partie de direction (40) ou à la partie de cadre (34).

13. Véhicule selon la revendication 12,
**caractérisé en ce**
**que** le corps de palier (47) présente un contour extérieur cylindrique circulaire ou sphérique.

14. Véhicule selon l'une quelconque des revendications 1 à 13,
**caractérisé en ce**
- **qu'**un capteur d'inclinaison (25) est prévu pour la détermination d'un angle d'inclinaison de l'axe longitudinal de véhicule (X) par rapport à un plan horizontal (26) s'étendant perpendiculairement au sens de gravité (G),
- **qu'**un dispositif de commande (27) couplé au dispositif de direction (20) et au capteur d'inclinaison (25) est prévu pour la génération d'ordres d'entraînement et d'ordres de freinage selon l'angle d'inclinaison et pour la commande du dispositif d'entraînement (17) en fonction des ordres de direction, des ordres d'entraînement et des ordres de freinage.
